# EUROPEAN PATENT SPECIFICATION

(11) **EP 1 457 427 B1**
(45) Date of publication and mention of the grant of the patent: **26.07.2006**
(21) Application number: 03075733.0
(22) Date of filing: 12.03.2003
(51) Int. Cl.: B65D 23/08, B65D 23/10, B65C 3/08, B29C 63/42

(54) **Apparatus for the manufacture of a sleeved bottle**
Vorrichtung zur Herstellung einer mit einer Manschette versehenen Flasche
Appareil pour la fabrication d'une bouteille couverte par un manchon

(43) Date of publication of application: 15.09.2004
(73) Proprietor: THE PROCTER & GAMBLE COMPANY, Cincinnati, Ohio 45202 (US)
(72) Inventor: Decaix, Francois, 1180 Uccle (BE); Etesse, Patrick Jean-Francois, 1040 Brussels (BE); Ricci, Patrizio, 1850 Grimbergen (BE)
(74) Representative: Mather, Peter Geoffrey

(56) References cited:
- EP-A- 0 547 754
- EP-A- 1 083 041
- EP-A- 1 083 129
- EP-A- 1 238 916
- FR-A- 2 803 833
- US-A- 4 048 281
- US-A- 4 565 592

## Description

The present invention relates to an apparatus for the manufacture of a decorated bottle, the bottle having a handle. In particular it relates to a bottle having a decorated sleeve which is either shrunk around, or stretched over, the outside of the handled bottle.

EP-A-1 238 916, published on 11^{th} September 2002, describes a process for the manufacture of a decorated bottle, the bottle having a sleeve around the outside of the bottle, and having a handle, the handle being substantially exposed outside of the sleeve.

The sleeving process essentially comprises two steps: i) the application of the sleeve to the bottle; and ii) the insertion of a free end of the bottle through the sleeve. Optionally a subsequent step involves heat shrinking the sleeve around the bottle.

The application of the sleeve to the bottle can be accomplished with known apparatus. However the apparatus for inserting the free end of the handle through the sleeve is new. EP-A-1 238 916 suggests that suitable handle inserting means be provided by which the sleeve is deformed so that the cut-out region of the sleeve encompasses the free end of the handle. Such a deforming means it is suggested could, for example, be a cam in combination with a deforming bar.

The aim of the present invention is to provide an apparatus for improving the process of manufacture of the decorated, sleeved bottle.

### Summary of the Invention

The present invention concerns an apparatus for applying a sleeve to a bottle, wherein the bottle comprises a handle, the handle having opposing ends wherein one end of the handle merges with the bottle in a merging region and the other end of the handle is a free end, the apparatus comprising a sleeve applicator, and a means for inserting the free end of the handle through a hole in the sleeve. According to the invention the apparatus further comprising a transport means, the transport means being between the sleeve applicator and the means for inserting the free end of the handle through a hole in the sleeve, and wherein the elements of the transport means are in direct contact with the bottle but the elements of the transport means do not come into contact with the sleeve.

### Detailed Description of the Invention

In the present invention the sleeve applicator apparatus and the handle inserting apparatus are two separate machines which are linked together by a means for transporting the bottle from the sleeve applicator apparatus to the handle inserting apparatus. This arrangement has the advantage that a commercially available sleeve applicator apparatus may be used by coupling it to a handle inserting apparatus with the transport means.

The elements of the transport means are in direct contact with the bottle, but the elements of the transport means do not come in to contact with the sleeve. This is because if the transport means is in contact with both sleeve and bottle, there is likely to be relative movement between the transport means and the sleeve, causing the sleeve to be displaced, either axially or radially, relative to the bottle. This causes difficulties at the handle inserting apparatus which immediately follows the transport means because the sleeve may no longer be well aligned with the handle. The transport means may consist of a conveyor belt at the exit of the sleeve applicator machine, or alternatively, a conveyor belt followed by a feed screw at the entry of the handle inserter to create the pitch. A feed screw may be single or double-sided, for example. The feed screw is preferably avoided however because the screw may be in contact with the sleeve and thus may cause a relative movement with the sleeve. The transport means may also comprise bottle supporting elements in which the bottle can be held or supported and then manipulated. Such bottle supporting elements can be either free moving on a conveyor belt or can be linked to a transfer mechanism such as a chain or belt. The bottles can be held in these supporting elements either by gripping part of bottle, for example the neck or the base of the bottle, or by simply supporting the bottle upon the supporting element. The advantage of such supporting elements is that there is no relative movement between the transport means and the sleeve. Another advantage is that the bottle can be vertically offset relative to the sleeve which allows partial coverage of a specific part of the bottle or ensuring a bottle coverage including the base. Most preferred is a system of positioning and pitching belts which are controlled in speed and position. Such belts create a fixed pitch between the bottles at the entry of the handle inserter and ensure the transport of the bottle without contact to the sleeve. Such belts are commercially available and are compatible with commercially available sleeve applicator apparatus.

According to the invention, it is preferred that the bottle infeed means into the handle inserter apparatus does not cause abrupt change to the bottle speed or direction. This is because an abrupt change of the speed or direction could deform the bottle or sleeve, creating product quality defects through scratches, or cause bottle unbalance or limit insertion apparatus speed capability.

The infeed means may comprise a radial infeed in a rotary insertion apparatus, but this is less preferred because the bottle direction will have to change instantaneously through ninety degrees to enter the rotary machine. Alternatively the infeed means may comprise a set of starwheels as in standard rotary machines, but this is preferably avoided because the starwheels are likely to contact the sleeve as well as the bottle and create sleeve displacement with regard to the bottle. More preferred is a tangential infeed in a rotary machine transferring the bottle from a conveyor onto a rotary platform, this offers advantage of the smooth change of bottle speed and direction.

In another embodiment which is not according to the present invention the sleeve applicator apparatus and the handle inserting apparatus are combined into an integrated machine. By "integrated machine" it is meant herein that the sleeve applicator apparatus and the handle inserting apparatus are combined into a single unit.

The process can be implemented on a machine with small space requirement, and yet still having a high bottle rate capability. For comparison, the sleeve application / handle insertion could be done on a linear machine with multiple heads but this arrangement offers a limited speed capability; typically below about 100 bottles/min; and the space requirement is high. More preferred is a sleeve application / insertion process carried out on an integrated rotary machine. The advantage is that the process can be done at high bottle rate; up to 1000 to 1200 bottles/min depending on the number of stations on the rotary machine. To achieve a machine rate of 200 to 300 bottles/min (assuming a bottle size from 200 to 400mm height), it is feasible to use a rotary machine with less than 30 stations. Increasing the bottle speed ratio may conduct to difficulties such as place requirement of the shrink tunnel downstream of the process. The number of heads is preferably greater than 4, and more preferably between about 10 and about 20.

Assuming that the application of the sleeve is done with positive control, it is preferred that the sleeve application / handle insertion happens during the same application movement. This reduces relative movement between the sleeve and the bottle to the strict minimum of the application movement, and furthermore the machine size is reduced.

The handle of the bottle extends from a base end which is merged with the bottle towards a free end. If the sleeve would be applied over the bottle in the direction from the base end of the handle toward the free end of the handle then three movements are necessary. It is necessary to apply the sleeve over the bottle, then the sleeve is deformed in order to have the sleeve hole inserted around the free end of the handle, and finally a reverse relative movement between the bottle and the sleeve is needed in order to have the sleeve in final position. More preferred is the concept where the sleeve application / handle insertion is done in the direction from the free end of the handle toward the base end of the handle. This offers the advantage that the relative movement of the sleeve vs. the bottle is limited to the sleeve application movement since the insertion of the hole in the handle free end can be done in the same time. A further advantage is that some commercially available rotary application machines are available and can be adapted according to the present invention by addition of the handle insertion function. The apparatus may be designed so that the bottle can be handled from the neck in a supporting element so that the sleeve can be applied from the base.

In the embodiment of the present invention the handle inserting apparatus will now be described in more detail. If a means for inserting the handle through the sleeve by deforming the sleeve is provided, then the deforming means may be mechanical, such as a deforming bar or a mechanical gripper, either of which may be controlled by, for example, a cam system or a linear actuated motor; or the deforming means may be non-mechanical such as pneumatic energy, compressed air, vacuum system, or static electricity; or the deforming means may combine some combination of these. Alternatively the bottle may be designed such that the handle is "self-inserting" through the hole of the sleeve. This may be achieved if the free end of the handle projects beyond the circumference of the adjacent bottle contours so that when the sleeve is applied over the bottle the handle passes through the hole of the sleeve simply due to the orientation of the bottle and the sleeve. Another alternative for the self inserting process, for example the sleeve is applied slowly and positively controlled from the bottom of the bottle, a sleeve material with stretching characteristics could be selected; during application the stretched material would deform on the hole position in front of the free end of the handle and then the handle would be inserted in the hole.

In the embodiment of the present invention, it is preferred that the application of the sleeve is positively controlled in order to have a precise position of the sleeve on the bottle to enable the handle insertion in the sleeve hole without need of an extra relative movement between the sleeve and the bottle to align the sleeve hole and the handle. The sleeve application means could comprise a sleeve shooting process on the bottle but this is less preferred because the application speed is high and can create misalignment between the sleeve hole and the open handle. The sleeve application means could comprise a positive control of the sleeve during application with feeding belts or wheels with or without vacuum supporting elements.

In the embodiment of the present invention a control system may be added in order to provide further improved control of the relative position of the bottle and the sleeve. For example a video system or a sensor may monitor the orientation of the sleeve relative to the bottle. A control system, preferably a computer control system, may, by means of a feedback loop and a reorienting mechanism, correct any misalignment between the bottle and the sleeve. A reorienting mechanism may be a mechanical device such as a belt system for adjusting the sleeve position, or a device for supporting the bottle at the neck, base, body or handle and displacing the bottle either axially or radially within the sleeve.

In the embodiment of the present invention, it is preferred that the insertion of the handle into the hole happens with no relative speed between the bottle holder in motion and the insertion feature supporting element. This is because relative movement of the insertion feature supporting element and the bottle holder will limit accuracy of the insertion function. The sleeve insertion feature could comprise with a non moving deforming mean while the bottle holder is moving but this is not preferred because there is no deformation accuracy control of the sleeve since the linear speed of the bottle holder is never the same between bottle format runs or in transient or steady state conditions. The sleeve insertion could comprise an insertion feature installed on a moving element so that there is no relative movement between the bottle holder and the insertion feature element but this is not preferred because the insertion feature supporting element will always need to move back and forth in order to follow the bottle holder movement and still trigger the sleeve hole insertion on each bottle; but this is not preferred because this will create machine speed limitation and the process is less robust. More preferred is a system where the insertion feature supporting element is the same as the bottle supporting element. This offers the advantage that there is no relative movement between the bottle and the insertion feature.

It is desirable according to the embodiment of the present invention to provide adjustable means so that the apparatus can be used for a range of different sizes of bottles. This is achieved if the elements of the apparatus can be moved relative to one another, either automatically or by an operator, to accommodate taller/shorter bottles, bottles having different footprint size and shape, different handle sizes and designs, etc. It may be advantageous to hold the bottle by its neck because a wide range of different sizes of bottles may be designed with relatively few sizes of neck.

According to the present invention the process will further comprise the step of shrinking the sleeve around the bottle as described in EP-A-1 238 916. The shrinking of the sleeve around the outer surface of the bottle is preferably carried out by passing the bottle and the sleeve through a shrink tunnel in which hot air or steam is blown onto the sleeve causing it to shrink and take the external contours of the bottle. This shrinking process may be done in one or multi steps for process robustness in order to get good quality product.

When the heat shrinking step is employed after the sleeve application and handle insertion steps, it is preferred to select a film for the sleeve material, and to apply it around the bottle, such that the film has different shrink properties in the radial direction (around the bottle) and in the perpendicular direction (parallel to the major axis of the bottle). Preferably the film has a relatively high shrink ratio in the radial direction and a relatively low shrink ratio in the perpendicular direction. The minimum required shrink ratio in the radial direction depends upon the ratio of the diameter of the sleeve prior to shrinking to the diameter of the narrowest cross-section of the bottle. It has been found that satisfactory results can be achieved on bottle contours which require a radial shrink ratio of 75% or greater. The shrink ratio in the perpendicular direction, in contrast, should be as low as possible, preferably less than 5%.

One example of a suitable film material which can be selected to have the desired shrink properties is polyethylene terephthalate (PET).

It is desirable that the unshrunk sleeve fits closely around the bottle as this minimizes that required shrink ratio in the radial direction.

## Claims

1. An apparatus for applying a sleeve to a bottle, wherein the bottle comprises a handle, the handle having opposing ends wherein one end of the handle merges with the bottle in a merging region and the other end of the handle is a free end, the apparatus comprising a sleeve applicator, and a means for inserting the free end of the handle through a hole in the sleeve **characterised in that** the apparatus further comprises a transport means, the transport means being between the sleeve applicator and the means for inserting the free end of the handle through a hole in the sleeve and wherein the elements of the transport means are in direct contact with the bottle but the elements of the transport means do not come into contact with the sleeve.

2. An apparatus according to claim 1 wherein the transport means consists of positioning and pitching belts.

3. An apparatus according to claim 1 wherein the transport means consists of bottle supporting elements linked to a transfer mechanism.

4. An apparatus according to claim 1 wherein the transport means comprises a conveyor belt.

## Patentansprüche

1. Vorrichtung zum Anbringen einer Muffe an einer Flasche, wobei die Flasche einen Griff umfasst, wobei der Griff gegenüberliegende Enden aufweist, wobei ein Ende des Griffs in einem Übergangsbereich in die Flasche übergeht und das andere Ende des Griffs ein freies Ende ist, wobei die Vorrichtung einen Muffenapplikator und ein Mittel zum Einfügen des freien Endes des Griffs durch ein Loch in der Muffe umfasst, **dadurch gekennzeichnet, dass** die Vorrichtung ferner ein Transportmittel umfasst, wobei sich das Transportmittel zwischen dem Muffenapplikator und dem Mittel zum Einfügen des freien Endes des Griffs durch ein Loch in der Muffe befindet und wobei die Elemente des Transportmittels direkt mit der Flasche Kontakt haben, jedoch die Elemente des Transportmittels nicht mit der Muffe in Kontakt kommen.

2. Vorrichtung nach Anspruch 1, wobei das Transportmittel aus Positionierungs- und Abstandsriemen besteht.

3. Vorrichtung nach Anspruch 1, wobei das Transportmittel aus flaschentragenden Elementen besteht, die mit einem Übertragungsmechanismus verbunden sind.

4. Vorrichtung nach Anspruch 1, wobei das Transportmittel ein Förderband umfasst.

## Revendications

1. Appareil pour appliquer un manchon sur une bouteille, dans lequel la bouteille comprend une poignée, la poignée ayant des extrémités opposées où une extrémité de la poignée est encastrée dans la bouteille dans une région d'encastrement et l'autre extrémité de la poignée est une extrémité libre, l'appareil comprenant un applicateur de manchon, et un moyen pour insérer l'extrémité libre de la poignée à travers un trou dans le manchon, **caractérisé en ce que** l'appareil comprend en outre un moyen de transport, le moyen de transport étant entre l'applicateur de manchon et le moyen pour insérer l'extrémité libre de la poignée à travers un trou dans le manchon et où les éléments du moyen de transport sont en contact direct avec la bouteille mais les éléments du moyen de transport n'entrent pas en contact avec le manchon.

2. Appareil selon la revendication 1, dans lequel le moyen de transport est constitué de courroies de positionnement et de tangage.

3. Appareil selon la revendication 1, dans lequel le moyen de transport est constitué d'éléments porte-bouteilles liés à un mécanisme de transfert.

4. Appareil selon la revendication 1, dans lequel le moyen de transport comprend une courroie transporteuse.
